# FASCICULE DE BREVET EUROPEEN

(11) **EP 0 484 242 B1**
(45) Date de publication et mention de la délivrance du brevet: **09.03.1994**
(21) Numéro de dépôt: 91402916.0
(22) Date de dépôt: 30.10.1991
(51) Int. Cl.: G01P 3/481, G01P 1/04

(54) **Capteur avec dispositif de maintien du codeur**
Messaufnehmer mit Vorrichtung zum Andrücken des Pulsrades
Sensor arrangement with encoder retaining means

(30) Priorité: 31.10.1990 US 607181
(43) Date de publication de la demande: 06.05.1992
(73) Titulaire: SNR ROULEMENTS, F-74000 Annecy (FR)
(72) Inventeur: Brauer, Michael C., F-75116 Paris (FR)
(74) Mandataire: Ballot, Paul Denis Jacques

(56) Documents cités:
- EP-A- 0 394 083
- DE-A- 2 065 344
- US-A- 3 683 219
- US-A- 4 321 495
- IBM TECHNICAL DISCLOSURE BULLETIN, vol. 19, no. 8, Janvier 1977, New York, US, pages 2933-2934; Garcia et al: "Self-adjusting thrust bearing tachometer"

## Description

Cette invention concerne d'une façon générale des capteurs et plus particulièrement un capteur où le codeur est maintenu à proximité étroite de l'élément capteur.

Des centrales électroniques (ECU) collectent des informations provenant de capteurs et commandent l'action de nombreuses fonctions vitales dans les automobiles. Les domaines principaux dans lesquels les ECU ont fait leurs percées concernent le moteur, la transmission, la suspension et les freins antiblocage.

Dans tous ces cas, les données définissant un mouvement de rotation ou un changement de position sont fournies à l'ECU qui élabore une réponse calculée ou cartographiée idéale pour les conditions de fonctionnement. L'ECU initie ensuite des changements dans la fonction contrôlée de façon à réduire au minimum l'écart par rapport à la condition idéale. Une grande fiabilité, une bonne résolution et des coûts économiques sont souhaités dans la technologie des capteurs.

Le besoin de détecter la position de colonnes de direction d'automobiles ou d'arbres s'est développé dans les systèmes de suspension actifs, les directions assistées à commandes électroniques, les systèmes de surveillance de la sécurité des conducteurs, les systèmes à quatre roues directrices ainsi que dans les systèmes de contrôle de traction et de freinage antiblocage. Dans ces conditions, différents capteurs ont été réalisés pour détecter la vitesse, le sens de rotation et une impulsion de référence (c'est-à-dire une position vraie). Les moyens conventionnels pour obtenir une information concernant l'angle du volant est un système à capteur optique ou un accéléromètre.

Certains des grands perfectionnements apportés au confort des passagers ont été obtenus grâce à une amélioration des caractéristiques de roulage des automobiles. Les améliorations ont été obtenues, entre autres choses, grâce à l'introduction de systèmes de suspension active et semi-active. Les systèmes conventionnels détectent une accélération latérale qui est introduite dans l'ECU de contrôle du roulage. Il existe différentes manières pour obtenir des données concernant l'accélération latérale. Un moyen classique consiste à utiliser une information de position angulaire de la colonne de direction, en combinaison avec la vitesse du véhicule, pour déterminer l'accélération latérale résultante.

Les systèmes précités utilisent des codeurs qui sont fixés sur un arbre rotatif et placés à proximité étroite du capteur. Dans des situations où l'arbre est soumis à un mouvement ou des vibrations importantes, le codeur peut être écarté du capteur, ce qui conduit à des informations incorrectes.

Cet exemple illustre les limitations qui affectent les capteurs connus. En conséquence, il est évident qu'il serait avantageux de disposer d'autres moyens pour éliminer une ou plusieurs des limitations indiquées ci-dessus.

A ce titre, il est connu par le document EP-A 0 394 083 de disposer d'un capteur fixe disposé à proximité d'un élément rotatif et d'un codeur tournant solidaire de l'élément rotatif par l'intermédiaire d'un moyen de liaison élastique pour transmettre le mouvement de rotation audit codeur.

L'inconvénient majeur du dispositif décrit dans ce document réside dans le fait qu'il nécessite une adaptation particulière à chaque cas d'application car les éléments constitutifs sont tributaires du palier ou roulement sur lequel ils sont montés et, notamment, il ne dispose d'aucun moyen de protection contre les agents extérieurs pouvant nuire à sa fiabilité.

L'invention a pour objet d'éviter ces inconvénients et concerne à cet effet un dispositif pour détecter la position angulaire d'un élément rotatif, du type comprenant :
- un capteur fixe placé dans une position adjacente à l'élément rotatif, ledit capteur étant fixe par rapport à l'élément rotatif;
- un codeur tournant avec l'élément rotatif ce codeur étant placé dans une position adjacente au capteur;
- un moyen d'application pour maintenir le codeur à proximité étroite du capteur;
- des moyens de liaison pour relier et transmettre un mouvement de rotation dudit élément rotatif au moyen d'application et de celui-ci au codeur à entraîner angulairement;

caractérisé en ce que ledit dispositif est contenu dans un carter dans lequel sont disposés successivement,
- le capteur fixe disposé au fond du carter;
- le codeur en contact avec un support réalisé dans le carter et disposé dans celui-ci à proximité étroite du capteur;
- le moyen d'application qui est solidaire en rotation du codeur par l'intermédiaire d'un élément de liaison interposé entre le codeur et le moyen d'application;
- un autre élément intermédiaire de liaison pour relier et transmettre un mouvement de rotation dudit élément rotatif audit moyen d'application lequel élément de liaison constitue simultanément un moyen de fermeture du carter.

Cet aspect et d'autres ressortiront de la description détaillée de l'invention qui va suivre, cette description étant faite en relation avec les dessins ci-joints :
- la figure 1 est une vue en coupe latérale illustrant une réalisation d'un codeur axial selon l'invention;
- la figure 2 est une vue en élévation latérale éclatée illustrant le codeur de la figure 1;
- la figure 3 est une vue en élévation latérale illustrant une autre réalisation d'un moyen d'application qui peut être utilisé pour maintenir le codeur de la présente invention;
- la figure 4 est une vue en coupe latérale d'une autre réalisation d'un moyen d'application pouvant être utilisé pour maintenir le codeur de la présente invention, et

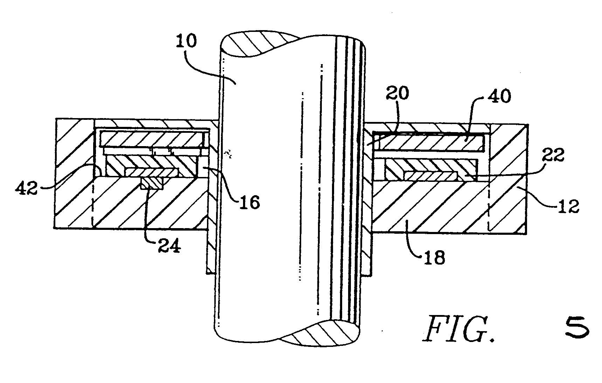

- la figure 5 est une vue semblable d'une autre réalisation d'un codeur tel que celui de la figure 1, ce codeur étant maintenu par un élément magnétique.

Dans cette description, des éléments identiques seront désignés par des références numériques identiques;

Un élément rotatif ou arbre 10 tourne par rapport à un carter 12. Le carter peut être mobile, comme dans le cas d'un véhicule, ou bien immobile dans le cas d'une pièce lourde de machine, mais la présente invention concerne d'une façon générale la détermination précise d'un mouvement relatif entre l'élément rotatif et le carter.

Le carter 12 entoure l'arbre rotatif 10. Le carter 12 comporte à l'intérieur un support 16 de codeur. Un côté axial du support de codeur est limité par une partie de contact 18 formée dans le carter 12. En variante, différentes parties du carter 12 peuvent être enlevées ou modifiées selon l'application désirée.

Un élément de transmission ou de liaison 20 est relié de façon tournante à un codeur annulaire 22 et à l'arbre rotatif 10. Le codeur annulaire 22 est monté sur le support 16. Le carter 12 peut être déplacé dans une direction axiale par rapport à l'arbre rotatif 10. Un élément capteur 24 peut capter un mouvement de rotation du codeur annulaire et est monté à l'intérieur du carter 12.

Un moyen d'application 26 maintient le codeur annulaire 22 à proximité étroite de l'élément capteur 24. Pour transmettre avec précision une rotation du moyen d'application ou de maintien 26 au codeur 22, des moyens de liaison 25 sont montés respectivement sur le moyen de maintien 26 et sur le codeur. Les moyens de liaison 25 peuvent être des moyens conventionnels de fixation, comme des moyens d'assemblage par emboîtement, des moyens adhésifs ou des attaches séparées.

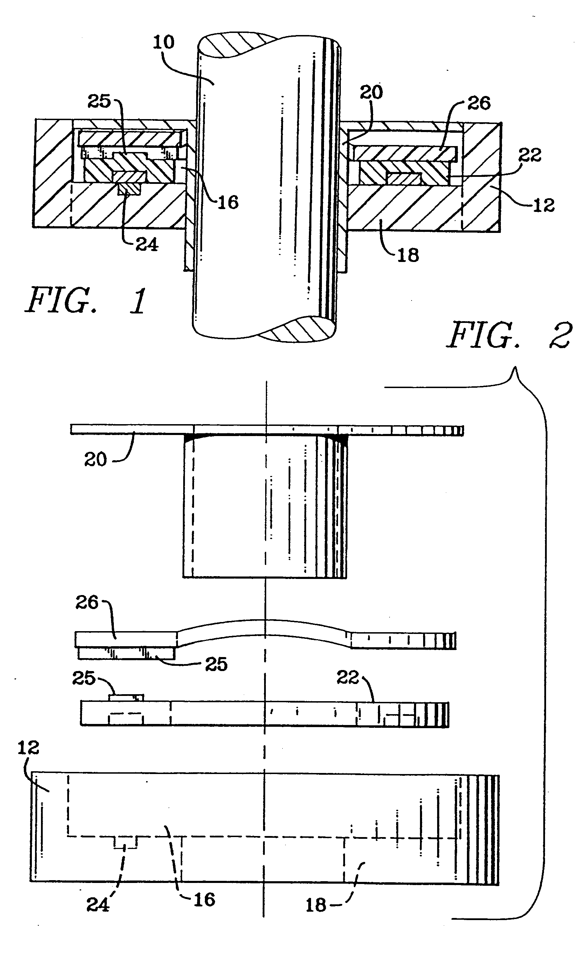

Le codeur annulaire 22 peut être détecté par le capteur 24 suivant une direction axiale par rapport à l'arbre 10, comme illustré sur les figures 1 et 6. Il est essentiel que l'élément capteur 24 soit monté suivant la même orientation de détection que le codeur annulaire 22.

Il est essentiel que le codeur annulaire 22 soit placé à proximité étroite du capteur 24 pour que celui-ci fournisse des indications correctes. Si le carter 12 ou l'arbre sont soumis à des vibrations ou à des forces importantes, les codeurs annulaires 22 de l'art antérieur peuvent être écartés de l'élément capteur 24 en produisant des informations incorrectes.

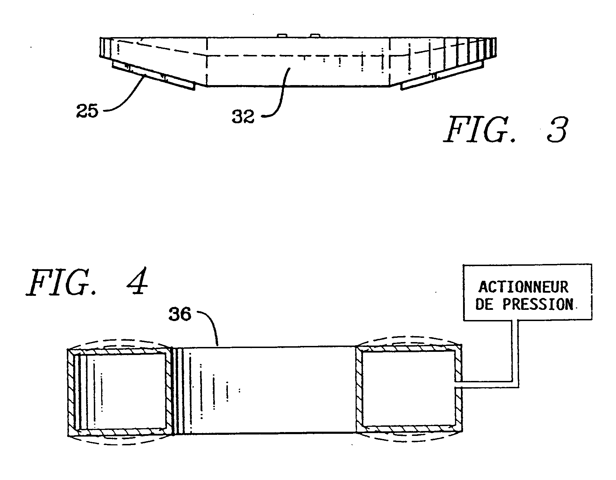

Pour réduire au minimum de telles informations incorrectes, le moyen de maintien 26 agit de façon à maintenir le codeur annulaire 22 à proximité étroite du capteur 24. Les figures 1 et 2 représentent une rondelle ondulée 30 qui est utilisée pour maintenir le codeur 22. La figure 3 représente en vue en élévation latérale une rondelle Belleville 32 qui peut être utilisée en variante pour maintenir le codeur. Cependant, il est évident qu'il est possible d'utiliser tous types bien connus de moyens d'application autres que des ressorts pour maintenir le codeur. Egalement, on peut utiliser des types de rondelles élastiques autres que des rondelles Belleville et des rondelles ondulées.

Par exemple, un dispositif hydraulique ou pneumatique 36 (cf. figure 4) peut être utilisé pour maintenir le codeur. Un élément magnétique passif 40 peut aussi être utilisé comme illustré sur la figure 6. Dans le dispositif magnétique passif, le codeur 22 est repoussé magnétiquement ou attiré par l'élément 40 au contact de la surface 42 sur laquelle le capteur 24 est monté. Le codeur 22 peut également produire la force d'attraction ou de répulsion de même que le carter 12. Par exemple, si le carter 12 est en acier, le codeur 22 peut être attiré magnétiquement sur celui-ci.

Différents types de codeurs 22 et de capteurs 24 peuvent être utilisés dans le présent dispositif. Des capteurs à effet Hall sont utilisables en particulier mais il est possible d'employer des capteurs magnétorésistifs. On peut utiliser dans la présente invention tout type de codeur dont l'efficacité ou la fiabilité est améliorée par une disposition à proximité étroite du capteur.

## Revendications

1. Dispositif pour détecter la position angulaire d'un élément rotatif (10), du type comprenant :
- un capteur fixe (24) placé dans une position adjacente à l'élément rotatif (10), ledit capteur étant fixe par rapport à l'élément rotatif;
- un codeur (22) tournant avec l'élément rotatif (10), ce codeur (22) étant placé dans une position adjacente au capteur (24);
- un moyen d'application (26) pour maintenir le codeur (22) à proximité étroite du capteur (24);
- des moyens de liaison pour relier et transmettre un mouvement de rotation dudit élément rotatif (10) au moyen d'application (26) et de celui-ci au codeur (22) à entraîner angulairement;
caractérisé en ce que ledit dispositif est contenu dans un carter (12) dans lequel sont disposés successivement,
- le capteur fixe (24) disposé au fond du carter (12);
- le codeur (22) en contact avec un support (16) réalisé dans le carter (12), et disposé dans celui-ci à proximité étroite du capteur (24);
- le moyen d'application 26 qui est solidaire en rotation du codeur (22) par l'intermédiaire d'un élément de liaison (25) interposé entre le codeur (22) et le moyen d'application (26);
- un autre élément intermédiaire de liaison (20) pour relier et transmettre un mouvement de rotation dudit élément rotatif (10) audit moyen d'application (26) lequel élément de liaison (20) constitue simultanément un moyen de fermeture du carter (12).

2. Dispositif selon la revendication 1, caractérisé en ce que l'élément de liaison 20 est constitué par un fourreau tubulaire axial solidaire de l'organe rotatif (10) et d'un disque annulaire s'étendant radialement a une extrémité dudit fourreau pour venir en contact du moyen d'application (26) et assurer la fermeture du carter (12).

3. Dispositif selon l'une des revendications 1 ou 2, caractérisé en ce que ledit moyen d'application est du type mécanique.

4. Dispositif selon la revendication 1 ou 2, caractérisé en ce que ledit moyen d'application (26) est une rondelle élastique.

5. Dispositif selon la revendication 4, caractérisé en ce que ladite rondelle est une rondelle Belleville.

6. Dispositif selon la revendication 5, caractérisé en ce que ladite rondelle est une rondelle ondulée.

7. Dispositif selon l'une des revendications 1 ou 2, caractérisé en ce que ledit moyen d'application (26) est un dispositif hydraulique (36).

8. Dispositif selon l'une des revendications 1 ou 2, caractérisé en ce que ledit moyen d'application (26) est un dispositif pneumatique (36).

9. Dispositif selon l'une des revendications 1 ou 2, caractérisé en ce que ledit moyen d'application (26) est un dispositif électromécanique.

10. Dispositif selon l'une des revendications 1 ou 2, caractérisé en ce que ledit moyen d'application (26) est un dispositif magnétique passif (40).

11. Dispositif selon l'une des revendications 1 ou 2, caractérisé en ce que ledit codeur (22) est un codeur annulaire dont la direction de détection est parallèle à l'axe dudit élément rotatif (10).

12. Dispositif selon la revendication 11, caractérisé en ce qu'une force de précharge est exercée sur l'élément de transmission dans une direction parallèle à l'axe de l'élément rotatif (10).

13. Dispositif selon l'une quelconque des revendications précédentes, caractérisé en ce que ledit capteur (24) est poussé en direction dudit codeur (22).

14. Dispositif selon l'une quelconque des revendications précédentes, caractérisé en ce que ledit codeur (22) est poussé en direction dudit capteur (24).

15. Dispositif selon l'une quelconque des revendications 1 à 14, caractérisé en ce que ledit carter (12) assure un guidage axial du codeur tournant (22).

## Patentansprüche

1. Vorrichtung zur Messung der Winkelposition eines Drehteils (10), welche aufweist:
- einen feststehenden Fühler (24), der in einer zum Drehteil (10) benachbarten Stellung angeordnet ist, wobei der Fühler in bezug auf das Drehteil feststeht;
- einen sich mit dem Drehteil (10) drehenden Codierer (22), wobei dieser Codierer (22) in einer zum Fühler (24) benachbarten Stellung angeordnet ist;
- eine Halteanordnung (26), um den Codierer (22) in unmittelbarer Nähe des Fühlers (24) zu halten und
- eine Verbindungsanordnung zum Verbinden und Übertragen einer Drehbewegung des Drehteils (10) zur Halteanordnung (26) und von dieser zum Codierer (22), um diesem eine Winkelbewegung zu erteilen,
dadurch gekennzeichnet, daß die Vorrichtung in einem Gehäuse (12) enthalten ist, in dem aufeinanderfolgend angeordnet sind,
- der feststehende Fühler (24) am Boden des Gehäuses (12),
- der Codierer (22) im Kontakt mit einer im Gehäuse (12) vorgesehenen Halterung (16) in unmittelbarer Nähe des Fühlers (24),
- die Halteanordnung (26), die drehfest mit dem Codierer (22) über ein Verbindungsteil (25), das zwischen dem Codierer (22) und der Halteanordnung (26) vorgesehen ist, verbunden ist und
- ein weiteres Verbindungs-Zwischenteil (20) zum Verbinden und Übertragen einer Drehbewegung vom Drehteil (10) auf die Halteanordnung (26), wobei dieses Verbindungsteil (20) zugleich eine Verschlußanordnung für das Gehäuse (12) bildet.

2. Vorrichtung nach Anspruch 1, dadurch gekennzeichnet, daß das Verbindungsteil (20) aus einer axialen rohrförmigen Buchse besteht, die fest mit dem Drehteil (10) verbunden ist und aus einer ringförmigen Scheibe besteht, in radialer Ausdehnung an einem Ende der Buchse zur Anlage an der Halteanordnung (26), um damit ein Verschließen des Gehäuses (12) zu gewährleisten.

3. Vorrichtung nach einem der Ansprüche 1 oder 2, dadurch gekennzeichnet, daß die Halteanordnung eine mechanische Anordnung ist.

4. Vorrichtung nach Ansprüchen 1 oder 2, dadurch gekennzeichnet, daß die Halteanordnung (26) eine elastische Ringscheibe ist.

5. Vorrichtung nach Anspruch 4, dadurch gekennzeichnet, daß die Ringscheibe eine Belleville-Ringscheibe ist.

6. Vorrichtung nach Anspruch 5, dadurch gekennzeichnet, daß die Ringscheibe eine gewellte Ringscheibe ist.

7. Vorrichtung nach einem der Ansprüche 1 und 2, dadurch gekennzeichnet, daß die Halteanordnung (26) eine hydraulische Anordnung (36) ist.

8. Vorrichtung nach einem der Ansprüche 1 oder 2, dadurch gekennzeichnet, daß die Halteanordnung (26) eine pneumatische Anordnung (36) ist.

9. Vorrichtung nach einem der Ansprüche 1 oder 2, dadurch gekennzeichnet, daß die Halteanordnung (26) eine elektromechanische Anordnung ist.

10. Vorrichtung nach einem der Ansprüche 1 oder 2, dadurch gekennzeichnet, daß die Halteanordnung (26) eine passive magnetische Anordnung (40)ist.

11. Vorrichtung nach einen der Ansprüche 1 oder 2, dadurch gekennzeichnet, daß der Codierer (22) ein ringförmiger Codierer ist, dessen Meßrichtung parallel zur Achse des Drehteils (10) verläuft.

12. Vorrichtung nach Anspruch 11, dadurch gekennzeichnet, daß eine Vorspannung auf das Übertragungsteil in einer Richtung parallel zur Achse des Drehteils (10) ausgeübt wird.

13. Vorrichtung nach einem der vorhergehenden Ansprüche, dadurch gekennzeichnet, daß der Fühler (24) in Richtung des Codierers (22) beaufschlagt wird.

14. Vorrichtung nach einem der vorhergehenden Ansprüche, dadurch gekennzeichnet, daß der Codierer (22) in Richtung des Fühlers (24) beaufschlagt wird.

15. Vorrichtung nach einem der Ansprüche 1 bis 14, dadurch gekennzeichnet, daß das Gehäuse (12) die axiale Führung des sich drehenden Codierers (22) gewährleistet.

## Claims

1. Device for detecting the angular position of a rotational member (10), of the type comprising:
- a fixed sensor (24) placed in a position adjacent to the rotational member (10), the said sensor being fixed with respect to the rotational member;
- an encoder (22) rotating with the rotational member (10), this encoder (22) being placed in a position adjacent to the sensor (24);
- an application means (26) for maintaining the encoder (22) in close proximity with the sensor (24);
- connecting means for connecting and transmitting a rotational movement from the said rotational member (10) to the application means (26) and from the latter to the encoder (22) to be driven angularly;
characterised in that the said device is contained in a casing (12) in which are disposed successively,
- the fixed sensor (24) disposed at the bottom of the casing (12);
- the encoder (22) in contact with a support (16) constructed in the casing (12), and disposed in the latter in close proximity with the sensor (24);
- the application means 26 which is locked in rotation with the encoder (22) through the intermediary of a connecting member (25) interposed between the encoder (22) and the application means (26);
- another intermediate connecting member (20) for connecting and transmitting a rotational movement of the said rotational member (10) to the said application means (26) which connecting member (20) constitutes simultaneously a means for closure of the casing (12).

2. Device according to Claim 1, characterised in that the connecting member 20 is constituted by an axial tubular sleeve securely attached to the rotational member (10) and by an annular disk extending radially at one end of the said sleeve in order to come into contact with the application means (26) and to ensure the closure of the casing (12).

3. Device according to any of Claims 1 or 2, characterised in that the said application means is of the mechanical type.

4. Device according to Claim 1 or 2, characterised in that the said application means (26) is a resilient washer.

5. Device according to Claim 4, characterised in that the said washer is a cup washer.

6. Device according to Claim 5, characterised in that the said washer is a corrugated washer.

7. Device according to any of Claims 1 or 2, characterised in that the said application means (26) is a hydraulic device (36).

8. Device according to any of Claims 1 or 2, characterised in that the said application means (26) is a pneumatic device (36).

9. Device according to any of Claims 1 or 2, characterised in that the said application means (26) is an electromechanical device.

10. Device according to any of Claims 1 or 2, characterised in that the said application means (26) is a passive magnetic device (40).

11. Device according to any of Claims 1 or 2, characterised in that the said encoder (22) is an annular encoder the direction of detection of which is parallel to the axis of the said rotational member (10).

12. Device according to Claim 11, characterised in that a pre-load force is exerted on the transmission member in a direction parallel to the axis of the rotational member (10).

13. Device according to any of the preceding claims, characterised in that the said sensor (24) is pushed in the direction of the said encoder (22).

14. Device according to any of the preceding claims, characterised in that the said encoder (22) is pushed in the direction of the said sensor (24).

15. Device according to any of Claims 1 to 14, characterised in that the said casing (12) ensures an axial guiding of the rotating encoder (22).
